# EUROPEAN PATENT APPLICATION

(11) **EP 4 194 933 A1**
(43) Date of publication of application: **14.06.2023**
(21) Application number: 21306746.5
(22) Date of filing: 10.12.2021
(51) Int. Cl.: G02C 7/02

(54) **SYSTEM AND METHOD FOR DETERMINING A MYOPIA CONTROL SOLUTION USED BY A SUBJECT**

(71) Applicant: Essilor International, 94220 Charenton-le-Pont (FR)
(72) Inventor: DROBE, Bjorn, 339346 Singapore (SG); GARCIN, Gilles, 426927 SINGAPORE (SG); PERRIN, Jean-Luc, Shanghai, 200000 (CN); PAILLE, Damien, 546693 SINGAPORE (SG)
(74) Representative: Jacobacci Coralis Harle

(57) **Abstract**

System (60) for determining a modification of an initial myopia control solution used by a myopic subject, comprising one or more memories (10) having in memory values of individual features of said myopic subject and values of environmental parameters relative to conditions of use by said myopic subject of said initial myopia control solution and comprising one or more processors (20) programmed to: i) determine an individual score linked to a role of said individual features in causing the myopia of said myopic subject, said individual score depending on said values of individual features; ii) determine an environmental score linked to a role of said environmental parameters in causing the myopia of said myopic subject, said environmental score depending on said values of said environmental parameters; and iii) determine said modification of said initial myopia control solution for said subject based on said individual and environmental scores. The system can comprise an input device (40) and a data acquisition system (30).

## Description

### TECHNICAL FIELD

This disclosure relates to a system and method for determining a myopia control solution to be used by a myopic subject.

### BACKGROUND INFORMATION AND PRIOR ART

Numerous documents describe devices and methods for controlling myopia evolution in a subject, in particular in children.

Myopia occurs when the eyeball is too long, relative to the focusing power of the cornea and lens of the eye. This causes light rays to focus at a point in front of the retina, rather than directly on its surface.

As a result, distant objects are seen blurred by a myopic subject.

Different types of devices and products are known for slowing down myopia progression, such as ophthalmic lenses, contact lenses or drugs.

Moreover, different uses of these devices and products are known for slowing down myopia progression. Different myopia control solutions associating one or more devices and/or products and their specific use are therefore known and implemented by eye care professionals to try to limit the progression of myopia in given subjects.

Each subject may react differently to the different myopia control solutions. The different myopia control solutions known may therefore have different efficacy for different subjects. Moreover, the efficacy of each myopia control solution may vary with time and other conditions of implementation.

Monitoring the effects and/or the efficacy of the myopia control solution implemented for a subject is therefore necessary to ensure that an efficient myopia control solution is proposed to the subject at all times.

The determination of a myopia control solution to be used by a subject and modifications of this myopia control solution are usually decided by an eye care professional based on his experience and knowledge. It is therefore performed in a non uniform manner.

### SUMMARY

In this context, one object of the disclosure is to provide in an objective manner a system for determining a myopia control solution used by a subject. This is designed to help the eye care professional taking the decision of choosing the myopia control solution to be used by a subject or modifying the myopia control solution already used by the subject.

This is achieved according to the disclosure by providing a system for determining a myopia control solution to be used by a subject according to claim 1.

In the following description and claims, a "myopia control solution" designates a device or method used for:
- slowing or stopping the progression of myopia in myopic subjects,
- preventing emmetropic or slightly hyperopic subjects from becoming myopic, or in other words keeping the subject emmetropic or slightly hyperopic,
- delaying myopia onset in pre-myopic subjects.

Pre-myopic subjects are defined in the following paper: *"*IMI - Defining and Classifying Myopia: A Proposed Set of Standards for Clinical and Epidemiological Studies, Feb 2019*".*

The device and method according to the disclosure can then be used for subjects that are either emmetropic, hyperopic, pre-myopic or myopic.

In the following description, the wording "determining a myopia control solution" includes determining a first myopia control solution when the subject currently uses no myopia control solution, or a modification of an initial myopia control solution already used by the subject.

In a general manner, the system according to the disclosure enables determining a myopia control solution by an objective method, depending on the subject, and taking into account the specific causes of myopia in said subject.

In the following, the determination of the myopia control solution may include:
- a change from no myopia control solution to a myopia control solution, i.e., the determination of a first myopia control solution,
- an adjustment of the myopia control solution currently used by the subject, for example by modifying an implementation parameter of this myopia control solution such as an addition value, for example a sphere value of a lens, dosage of a drug, duration of wear of a device...,
- a change of the myopia control solution where the myopia control solution used by the subject is replaced by a different myopia control solution. Therefore, when the wording "modification" is used, it is meant that the myopia control solution initially used by the subject is either kept with an implementation parameter modified or replaced by another myopia control solution.

Many different basic myopia control solutions are known and will be described in the following description. The myopia control solutions considered in the following may comprise one basic myopia control solution or several basic myopia control solutions combined, that is to say, implemented simultaneously.

When the initial myopia control solution is only adjusted, the myopia control solution remains of the same type. It may be the same single basic myopia control solution, as described hereafter, or the same combination of two or more basic myopia control solutions. At least one implementation parameter of one of the basic myopia control solutions of said initial myopia control solution is adjusted. For example, the concentration or dosage of atropine is modified and/or the defocus provided is adjusted.

In a general manner, the implementation parameters of the myopia control solutions described here may comprise:
- concentration, dosage, frequency of instillation in the eye of a drug,
- value of an optical feature of an ophthalmic lens such as sphere, addition, cut-off level of wavelength filter, distribution of power in the periphery, location, density, size, geometry and/or power of micro-lenses, dimension, density, and/or intensity of scattering components, duration of wear of the ophthalmic lens,
- curvature profile, fitting, duration of wear of a lens for corneal reshaping...

When the myopia control solution is changed, the type of myopia control solution used is changed. The change may include replacing at least one of the basic myopia control solutions implemented in said initial myopia control solution by at least one other basic myopia control solution. The change may include adding one or several basic myopia control solutions to the initial myopia control solution already in use or removing one or several basic myopia control solutions from the initial myopia control solution already in use, to obtain a different myopia control solution.

Other advantageous and non-limiting features of the system according to the disclosure are described in claims 2 to 14.

The disclosure also relates to a method for determining a myopia control solution used by a subject according to claim 15.

### DETAILED DESCRIPTION OF EXAMPLE(S)

The following description with reference to the accompanying drawings will make it clear what the disclosure consists of and how it can be achieved. The disclosure is not limited to the embodiments illustrated in the drawings.

Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 is a schematic representation of the system,
- Figure 2 is a schematic representation of the different steps of the method implemented by the system of figure 1.

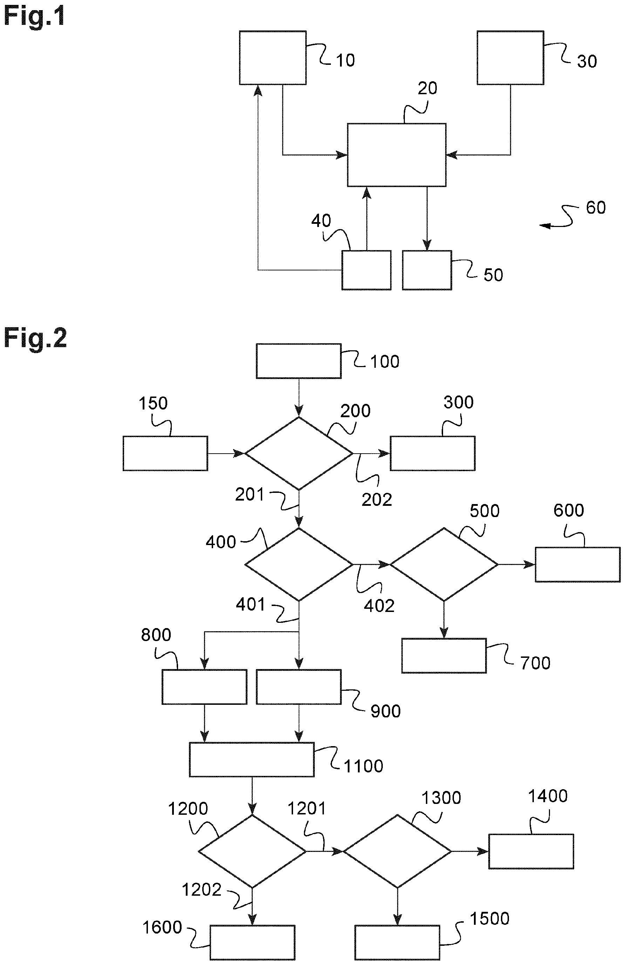

Figure 1 shows a schematic representation of the system 60.

As described hereafter, the system 60 comprises one or more memories 10 and one or more processors 20, said one or more memories 10 having in memory:
- values of individual features of said subject and
- values of environmental parameters relative to conditions of use by said subject of a myopia control solution and
said one or more processors 20 being programmed to:
i) determine an individual score for said subject depending on said values of individual features of said subject, said individual score being linked to a role of said individual features in causing the myopia of said subject,
ii) determine an environmental score for said conditions of use of the myopia control solution by said subject depending on said values of said environmental parameters, said environmental score being linked to a role of said environmental parameters in causing the myopia of said subject and
iii) determine said myopia control solution for said subject based on said individual and environmental scores.

The disclosure also relates to an associated method for determining a myopia control solution used by a subject, comprising the following steps:
- providing values of individual features of said subject and values of environmental parameters relative to conditions of use by said subject of said myopia control solution,
- determining an individual score for said subject depending on said values of individual features of said subject, said individual score being linked to a role of said individual features in causing the myopia of said subject,
- determining an environmental score for said conditions of use of the myopia control solution by said subject depending on said values of said environmental parameters, said environmental score being linked to a role of said environmental parameters in causing the myopia of said subject and
- determining said myopia control solution for said subject based on said individual and environmental scores.

In practice, the determination of the myopia control solution comprises the determination of a first myopia control solution or of a modification of the myopia control solution currently used by the subject.

When the subject initially does not use any device or method as myopia control solution, a first myopia control solution is determined in step iii). When the subject initially uses an initial myopia control solution, said modification includes determining an adjusted or changed myopia control solution for the subject.

The system and method according to the disclosure allow determining the root causes of myopia progression of a given subject through relevant measurements and data collecting. The system and method according to the disclosure then allows recommending a first myopia control solution for the subject based on the root causes

The system and method of the disclosure also allow determining and taking into account a threshold of myopia progression within a given amount of time while the first myopia control solution is implemented.

The subject is reexamined after a given amount of time and the root causes of myopia progression are determined again through relevant measurements and data collecting.

When the myopia progression of the subject is faster than expected, the system and method of the disclosure allow determining the reasons why the first myopia control solution did not work and recommend a modification of said first myopia control solution accordingly.

Said system and method allow determining a myopia control solution. This solution is recommended to the eye care professional. While determining said solution, said system and method may also sort a set of available myopia control solutions saved in said one or more memories. An ordered list of the available solutions may be established with a classification from the most recommended to the least recommended.

Any known available myopia control solution may be taken into account in the system according to the disclosure.

Up to date, many different myopia control solutions have been described and tested and are currently used to limit the progression of myopia in subjects.

The following list is therefore provided as an example and is not exhaustive nor limitative.

In the following, said myopia control solution comprises one or more devices for implementing one of the following actions or several of the following actions simultaneously.

Each following actions correspond to a basic myopia control solution:
- correcting or reducing the accommodative lag during near vision activities;
- correcting peripheral hyperopic defocus or providing myopic defocus;
- providing retinal stimulation;
- providing a different contrast in peripheral vision of the subject;
- limiting the amount of light with a specific wavelength entering an eye of the subject to reduce chromatism of the eye, retina's exposure to the specific wavelength
- providing light having a specific wavelength to the eye to inhibit eye lengthening,
- providing dynamically varying light stimuli,
- providing drugs to regulate retinal and scleral muscarinic receptors;
- reshaping the cornea of the eye to reduce refraction defects;
- reshaping the cornea of the eye to induce extended depth of focus;
- providing myopic defocus in the retinal periphery and/or optical aberrations by flattening the shape of the cornea,
- stiffening or strengthening of a sclera of the eye or/and a cornea of the eye and/or a choroid of the eye.

The accommodative lag of the eye is defined as the difference between accommodative demand and accommodative response and resulting in a residual refractive error.

In practice, these actions are performed with five types of devices for controlling myopia:
- Ophthalmic lenses integrated to spectacles,
- Contact lenses worn directly on the eye of the subject,
- Light sources for example to reproduce daily light indoors or avoid emitting wavelengths responsible for eye elongation,

- A device to modify the amount of some of the colors, entering the eye, that are responsible for eye elongation,
- Pharmaceutical products.

Each device for controlling myopia may perform one or several actions listed above. Each myopia control solution may use one or several devices for controlling myopia.

Said device may especially comprise a pharmaceutical drops provider, multifocal spectacle lenses, spectacle lenses with micro-structures, orthokeratology lenses or multifocal soft contact lenses and/or a device to provide at least one retinal stimulation using light stimuli located in front of a retina of an eye of the subject.

For example, correcting or reducing the accommodative lag during near vision activities is done using a lens having a positive sphere power in the region of the lens used in near vision tasks. It may be a bifocal lens comprising a zone with a positive sphere located in the near vision region of the lens or a progressive lens with addition in the near vision region.

An example of multifocal lenses used to control myopia may be a prismatic bifocal lens or Progressive Addition Lenses (PAL) having two optical zones: the zone located in the far vision region (upper part of the lens) compensate the myopic refraction defect of the eye, whereas the zone located in the near vision (lower part of the lens) region reduces the accommodation demand to see at near end and therefore the accommodative lag.

Correcting peripheral hyperopic defocus or providing myopic defocus may be achieved by using a lens having a positive sphere power in the periphery of the lens.

Customized lenses using multiple light stimuli located in front of retina of the eye of the subject may be used, which comprises:
- a refraction area having a first refractive power based on a prescription for correcting an abnormal refraction of said eye; and
- a plurality of at least three optical elements, at least one optical element having an optical function of not focusing an image on the retina of the eye so as to slow down the progression of the abnormal refraction of the eye.

Providing a different contrast in peripheral vision may be achieved by inserting scattering elements in the periphery of the lens.

Modifying the amount of some of the colors, for example of the red light, entering the eye may be achieved using a specific filter, for example integrated to a lens or digital screen filters.

Providing light having a specific wavelength to the eye to inhibit eye lengthening may be achieved by luminotherapy involving exposing eyes to light having a wavelength that triggers the dopamine receptors regulating eye elongation. Providing dynamically varying light stimuli may be achieved by exposing eyes to sinusoidal modulation of white light according to a temporal frequency.

Providing drugs to regulate retinal and scleral muscarinic receptors may be achieved for example by providing topical atropine directly delivered in the eye of the subject using eye drops. Other pharmacological approaches tried for myopia control include topical timolol, a nonselective beta-adrenergic antagonist, and oral 7-methylxanthine (7-MX), an adenosine antagonist, eye drops containing copper, a cofactor for lysyl oxidase activity.

The effect of the drugs that may be provided to the eye typically lasts for at least a few hours. This is why when implemented with one or several other basic myopia control solutions the use of drugs is considered simultaneous.

Corneal reshaping, also known as orthokeratology, is performed by fitting a specially designed gas permeable contact lens on the eye of the subject. The contact lens is typically flattened in order to reshape the cornea of the eye to reduce the myopic refraction defect. The contact lens is typically worn at night, so that the shape of the cornea is reshaped or corrected when the contact lens is removed in the morning.

Providing myopic defocus in the retinal periphery and/or optical aberrations by flattening the shape of the cornea may be achieved for example by using orthokeratology.

Homatropine drops can be used for stiffening or strengthening the sclera of the eye and/or the choroid of the eye as described in *"*The effect of adrenergic and cholinergic agents on anterior scleral thickness and Schlemm's canal in young healthy adults", Sander et al. published in Investigative Ophthalmology & Visual Science (IOVS) April 2014, Vol. 55, 558 (https://iovs.arvojournals.org/article.aspx?articleid=2271190&resultClick=1). Corneal collagen cross-linking by activating riboflavin with UV-A light has been used clinically to enhance corneal stiffness as described in *"*Differential Regional Stiffening of Sclera by Collagen Cross-linking" by Gawargious and al. in Investigative Ophthalmology & Visual Science July 2019, Vol.60, 4359. (https://iovs.arvojournals.org/article.aspx?articleid=2746058&resultClick=1).

A pharmacologic treatment, such as IVMED-85^{®} of iVeena Delivery Systems, Inc. (copper based) may be used to flatten the cornea and stiffen the sclera, as mentioned for example on the website of the Review of Myopia Management (https://reviewofmm.com/advancing-myopia-therapy-with-ivmed-85).

In practice, said one or more memories 10 comprise a database of available myopia control solutions.

All possible combinations of basic myopia control solutions may be taken into account, and therefore included in said database in said memory 10.

Usually, combinations of two basic myopia control solutions are considered, such as the combination of the use of pharmaceutical products such as atropine in combination with any other myopia control solution. The combination of lenses providing retinal stimulation with the use of a positive sphere zone in the near vision region could also be considered.

In the system of the disclosure, said one or more memories 10 have in memory one or more values of individual features of said subject.

Said values of individual features of said subject saved in said one or more memories comprise for example a value of one or more of the following individual features:
- personal, familial, or historical features of the subject, such as but not limited to: number of myopic parents and myopic siblings if any and/or level of myopia of parents of the subject, number of alleles of the subject's genotype indicating a risk of myopia, sex of the subject, age of the subject, Intelligence Quotient and/or general academic performance of the subject, season and/or date of birth of the subject, ethnicity and/or geographical origin of the subject,
- ocular biometrics parameter of at least one eye of the subject, such as, but not limited to, eye shape, axial length, anterior chamber depth, choroidal thickness, lens thickness, corneal shape or thickness, size of the subject, interpupillary distance,
- ocular biomechanics parameter of at least one eye of the subject, such as, but not limited to, corneal stiffness, scleral stiffness,
- optometric features of the subject, such as, but not limited to, central refraction, peripheral refraction, phoria, contrast sensitivity, color sensitivity, spherical or cylindrical refraction of the eye, prism, amplitude of accommodation, near point of convergence, dominant eye, peripheral refraction,
- medical history of the subject, such as, but not limited to, myopia onset age, previous visual correction equipment used, pathologies, change in rate of myopia progression, change of the biological pattern of the eye, change in the On/Off receptive fields on the retina, dry eyes.

Values of the one or more individual features memorized in the system may be normalized values. Example of the possible values for a set of individual features and the corresponding normalized values is given in Table 1 hereafter.

**Table 1**

| **Individual features** | **Possible values** | **Normalized values taken into account** |
|---|---|---|
| Number of myopic parents | 0 myopic parent | 0 |
| | one myopic parent | 0.5 |
| | 2 myopic parents | 1 |
| "Myopic" genome | homozygous for the risk allele: 2 risk alleles | 1 |
| | heterozygous for the risk allele: 1 risk allele | 0.5 |
| | homozygous for the other allele: 0 | 0 |
| Eye shape | Oblate: 0 | 0 |
| | Spherical: 0.5 | 0.5 |
| | Prolate: 1 | 1 |
| Sex | Female: 1 | 1 |
| | Male: 0 | 0 |
| Age range | [5,9] years old | 1 |
| | [10,14] years old | 0.66 |
| | [15,19] years old | 0.33 |
| | Above 20 years old | 0 |

Said one or more memories 10 also have in memory one or more values of environmental parameters relative to conditions of use by said subject of said myopia control solution.

Said values of environmental parameters comprise a value of one or more of the following environmental parameters of the subject:
- features relative to a visual behavior of the subject, such as time spent achieving near work, for example expressed in hours, and/or working distance for near work, for example expressed in diopters,
- time spent outdoors and/or indoors,
- type of environment, such as, but not limited to, rural or urban environments,
- country and/or city of residence and/or type of residence, such as but not limited to, individual house, appartement,
- activities and/or lifestyle,
- type of lighting used while performing near vision tasks, such as, but not limited to, bright light or dim light, usual time of day when using optical equipment, light environment,
- time spent while using the myopia control solution, also called usage time in the following,
- postural features of the subject such as viewing distance, reading posture including reading distance between eyes and smartphones, books or notebooks, head or eye declination when performing some specific tasks such as reading, watching TV, working on a laptop, head tilt, document tilt, relative position of document and head,
- level of undercorrection of said myopia,
- accommodation parameters, such as, but not limited to, level of accommodation lag, amplitude of accommodation, accommodative facility,
- binocular vision parameters, such as, but not limited to, phoria in near vision, fusional amplitude, stereopsis,
- parameters of lens usage such as, but not limited to, far or near vision zone of progressive or bifocal lenses used in near visual tasks.

The values of the one or more environmental parameters memorized in the system may be normalized values. Example of the possible values for a set of environmental parameters and the corresponding normalized values is given in Table 2 hereafter.

**Table 2**

| **Environmental parameters** | **Possible values** | **Normalized values taken into account** |
|---|---|---|
| Amount of near work | Less than 2 hours per day | 0 |
| | [2-4[h | 0.2 |
| | [4-6[h | 0.4 |
| | [6-8[h | 0.6 |
| | [8-10[h | 0.8 |
| | 10+ hours per day | 1 |
| Time spent outdoors | More than 2 hours per day | 0 |
| | Less than 2 hours per day | 1 |
| Type of environment | Rural | 0 |
| | Urban | 1 |
| Lighting conditions while performing near vision tasks | Bright light | 0 |
| | Low light | 1 |
| Time spent while using said myopia control solution each day | Full time (>=12h/day) | 0 |
| | [10,12]hours per day | 0.33 |
| | [5,10]hours per day | 0.66 |
| | Less than 5 hours per day | 1 |
| Lens usage (PAL, Bifocals) | Using near vision zone at near | 0 |
| | Using far vision zone at near | 1 |
| Reading distance | More than 30 cm | 0 |
| | [25,30]cm | 0.5 |
| | Less than 25 cm | 1 |
| Undercorrection | Accurate correction | 0 |
| | Undercorrection lower than 0.5D | 0.5 |
| | Undercorrection higher than 0.5 D | 1 |
| Lag of Accommodation | Low accommodative lag (<=1D) | 0 |
| | High accommodative lag (>1D) | 1 |
| Near phoria | Orthophoria or exophoria | 0 |
| | Esophoria | 1 |

The system 60 according to the disclosure comprises any necessary device for acquiring said values of the individual features and environmental parameters. In particular, said system 60 may comprise any measurement apparatus adapted to measure one or more of the values of said individual features, such as ocular biometrics parameter of at least one eye of the subject, ocular biomechanics parameter and/or optometric features of the subject.

Objective or subjective measures may be considered, for example for measuring the eye shape, axial length, anterior chamber depth, choroidal thickness, lens thickness, corneal shape, corneal stiffness, scleral stiffness of at least one eye of the subject.

The system 60 according to the disclosure may also comprise an input device 40 to manually input data in said one or more memories, or a communication device to retrieve data from a remote location.

Some of said values may be obtained by submitting said subject to a questionnaire survey and manually inputting the values in said one or more memories.

The individual features of the subject and the environmental parameters taken into account in the present system are selected because they may play a role in causing the myopia and/or may impact the currently used myopia control solution efficacy of said subject's eyes.

The individual features described above may be considered as internal causes for myopia, whereas the environmental parameters define external causes for myopia.

According to the disclosure, said one or more processors 20 of said system 60 are programmed to perform steps i), ii) and iii) described before.

### Steps i) and ii)

In step i), said one or more processors are programmed to determine an individual score for said subject depending on said values of individual features of said subject, said individual score being linked to the role of said individual features in causing the myopia of said subject.

In particular, the values of the individual features of the subject are combined in said individual score so that this individual score is representative of a global weight of the internal causes in causing the myopia of the eyes of the subject. This individual score corresponds to an internal root cause index of the subject.

In step ii), said one or more processors are programmed to determine an environmental score for said conditions of use of the myopia control solution by said subject depending on said values of said environmental parameters, said environmental score being linked to a role of said environmental parameters in causing the myopia of said subject.

In particular, the values of the environmental parameters are combined in said environmental score so that this environmental score is representative of a global weight of the external causes in causing the myopia of the eyes of the subject. This environmental score corresponds to an external root cause index of the subject.

The individual score is representative of the role of said individual features in causing the myopia and/or impacting the currently used myopia control solution efficacy of said subject. An increase of the individual score indicates an increase of the role of the individual features in causing the myopia of the subject. It indicates that the internal causes play an increased role.

The environmental score is representative of the role of said environmental parameters in causing the myopia and/or impacting the currently used myopia control solution efficacy of said subject. An increase of the environmental score indicates an increase of the role of the environmental parameters in causing the myopia of the subject. It indicates that the external causes play an increased role.

In practice, said one or more processors 20 are programmed to calculate said individual score and said environmental score as mean values or weighted mean values of the values of said individual feature or of the values of said environmental parameters, respectively.

In the case where the individual score and the environmental score are determined as weighted mean values of the values of said individual feature or of the values of said environmental parameters, respectively, the weight taken into account may be determined in various ways, such as machine learning techniques or classical epidemiological statistical methods.

The weights of all the individual features and all the environmental parameters may for example be set to 1.

The individual score and environmental score are determined as the mean value of the values of said individual features and environmental parameters respectively. They are for example determined as the sum of the normalized values of the individual features or environmental parameters divided by the number of values taken into account.

The weights may be predetermined and fixed, or they can be updated with each new calculation for the same subject by using machine learning techniques and including all past data of the subject.

The weights may as well be updated based on machine learning techniques performed on a database containing data gathered from all subjects or from a predetermined population of subjects

### Step iii)

In a step iii), said one or more processors 20 are programmed to determine said myopia control solution for said subject based on said individual and environmental scores.

This is for example achieved by using a predetermined and fixed relationship associating a myopia control solution and said individual and environmental scores.

The myopia control solution determined is displayed for example on a screen 50 of said system 60 (figure 1).

In a general manner, the system 60 comprises a device for emitting a signal indicating to the eye care practitioner the myopia control solution determined.

In an embodiment, said one or more processors 20 are programmed to determine a final score based on said individual and environmental scores and take it into account to determine said modification of said myopia control solution.

For example, said one or more processors are programmed to calculate said final score as the ratio between said individual score and the sum of said individual score and said environmental score.

The final score indicates which of the individual features and environmental parameters plays a predominant role in causing the myopia and/or impacting the efficacy of the myopia control solution currently used by the subject. In other words, it indicates if the root cause of myopia of the subject is mainly an internal cause or mainly an external cause. The final score corresponds to a root cause index.

Said one or more memories 10 of the system 60 comprises for example a database associating each possible value of the final score to a myopia control solution.

This database provides said relationship between said modification of said myopia control solution and said individual and environmental scores.

An example of such a database is shown in Table 3.

**Table 3**

| **Myopia control solution** | **Final score** |
|---|---|
| Atropine | 0.7 and above |
| Orthokeratology | [0.55 to 0.7[ |
| Spectacle lenses with Micro-structures | [0.45 to 0.55[ |
| Multifocal Soft Contact Lenses | [0.35 to 0.45[ |
| Prismatic bifocal lenses | [0.25 to 0.35[ |
| Multifocal spectacle lenses | Below 0.25 |

In an embodiment, the final scores of Table 3 can be modified according to the dose used. For example, for atropine the final score can be of 1 when a high dose is used and can be of 0,7 when a low dose is used.

The one or more processors 20 of the system 60 are then programmed to determine the myopia control solution by determining which myopia control solution is associated to the value of the final score calculated in said database.

In step iii), the one or more processors 20 then return a recommendation for said myopia control solution to the eye care professional. It is for example displayed on said screen 50.

This myopia control solution takes into account the root cause for myopia as reflected by the final score.

Said one or more processors are programmed to establish said relationship between said modification of said myopia control solution and said final score using a machine learning algorithm, for example a Bayesian model.

For example, with a database comprising N entries. each one containing the values of the individual and environmental scores and the solution used, a machine learning algorithm can be trained to provide the solution by establishing a function linking the individual and environmental scores with the myopia control solution used: f(individual score, environmental score) = final_score (myopia control solutions).

In another embodiment, said one or more processors are programmed to update said relationship between said myopia control solution and said final score using a machine learning algorithm.

An initial relationship may be established initially based on scientific theory and clinical results, but as more and more cases are recorded in the system, the myopia control solution determined and used are recorded and the subsequent results recorded and weighted into the calculations. Over time, a database is obtained which can be used for training a machine learning algorithm. This will allow the refinement of the ranges of final score associated with each myopia control solution, their progressive evolution according to population lifestyles and/or based on geographic location. It will also allow for updating the system when new generations of myopia control solutions are introduced which might be more efficient than the older generations.

First values of the individual features and environmental parameters may be determined during a first visit to the eye care practitioner. A first value of the final score is determined and taken into account by the system for determining the first myopia control solution to be used by said subject.

Then, ulterior values of the individual features and environmental parameters may be determined during an ulterior visit to the eye care practitioner. An ulterior value of the final score is determined, as individual features as well as the environmental parameters of the subject may change with time. The first myopia solution used by the subject may then be modified taking into account this ulterior value of the final score. The system then determines such a modification. Updates of the final score and subsequent modification of the myopia control solution currently used by the subject may be performed at intervals of time.

In particular, in cases where the myopia control currently used by the subject does not have an expected efficiency, determining the individual and environmental scores and the final score allows determining if the root cause for this lack of efficiency is linked to the internal or external causes of myopia.

More precisely, by determining the ulterior individual and environmental scores of the subject and comparing them with the previous individual and environmental scores of the subject, it is possible to determine which score has mostly changed and therefore if the root cause for inefficiency of the myopia control solution is mostly internal or external.

Schematically, if it is mainly for internal causes that the myopia control solution is inefficient, it indicates that the myopia control solution currently used is not adapted to the subject and should be changed for another, different myopia control solution. If it is mainly for external causes that the myopia control solution is inefficient, it indicates that the lack of efficiency may be linked to a lack of compliance of the subject relating to its usage or to unfitted implementation parameters of the myopia control solution. The implementation parameters of the myopia control solution currently used should then be modified to increase compliance and/or effects.

In another embodiment, said one or more processors 20 are programmed to use a decision tree to determine which is the root cause for myopia of the subject and for determining the first myopia control solution or the modification of the myopia control solution currently used.

In another embodiment, said or more processors 20 are programmed to use a bayesian model or other machine learning algorithm to define which root causes are the most plausible and determine the myopia control solution with best expected efficacy.

In a first example of implementation of the method of the disclosure, the following data are gathered for a first subject during a first visit to an eye care practitioner. The spherical equivalent refraction of the right eye is -2.50D, the spherical equivalent refraction of the left eye is -2.25D.

The values of the individual features memorized in said one or more memories of the system according to the disclosure at this first visit are summarized in the second column of Table 4.

**Table 4**

| **Individual featu res** | **Value and normalized value at first visit** | **Value and normalized value at second visit** | **Value and normalized value at third visit** |
|---|---|---|---|
| Number of myopic parents | Two myopic parents, Normalized value 1 | Two myopic parents, Normalized value 1 | Two myopic parents, Normalized value 1 |
| Sex | Male, normalized value 0 | Male, normalized value 0 | Male, normalized value 0 |
| Age | 6 years old, normalized value 1 | 7 years old, normalized value 1 | 8 years old, normalized value 1 |
| Individual score | 0.66 | 0.66 | 0.66 |

The weights for calculating the weighted mean are all set to 1.

The individual score calculated at this first visit by said one or more processors is equal to 2/3 = 0.66.

The values of the environmental parameters memorized in said one or more memories of the system according to the disclosure at this first visit are summarized in the second column of Table 5.

**Table 5**

| **Environmental parameters** | **Value and normalized value at first visit** | **Value and normalized value at second visit** | **Value and normalized value at third visit** |
|---|---|---|---|
| Amount of near work | 1h/day, normalized value 0 | 1h/day, normalized value 0 | 11h/day, normalized value 1 |
| Type of environment/Type of residence | Rural/house, normalized value 0 | Rural/house, normalized value 0 | Rural/house, normalized value 0 |
| Exophoria/Esophoria | Exophoria, normalized value 0 | Exophoria, normalized value 0 | Esophoria, normalized value 1 |
| Level of undercorrection | No undercorrection, normalized value 0 | No undercorrection, normalized value 0 | No undercorrection, normalized value 0 |
| Environmental score | 0 | 0 | 0.5 |

The child plays a lot of soccer and does not study a lot. The environmental parameters indicate no factor increasing the risk for myopia or causing myopia. The weights for calculating the weighted mean are all set to 1.

The environmental score calculated by said one or more processors at the first visit is equal to 0.

The final score of the first subject is calculated as the ratio 0.66 / (0.66+0) = 1. The final score of 1 is associated with the recommendation of high dose of atropine by Table 3 memorized in the system 60. Therefore, the system 60 determines in step iii) that the myopia control solution is high dose of atropine.

The first subject comes back after a year. At this second visit, the spherical equivalent refraction of the right eye is -3.50D, the spherical equivalent refraction of the left eye is -3D.

The values of the individual features memorized in said one or more memories 10 of the system 60 according to the disclosure at this second visit are summarized in the third column of Table 4.

The weights for calculating the weighted mean are all set to 1.

The individual score calculated at this second visit by said one or more processors 20 is equal to 2/3 = 0.66.

The values of the environmental parameters memorized in said one or more memories 10 of the system 60 according to the disclosure at this second visit are summarized in the third column of Table 5.

The environmental parameters indicate no factor increasing the risk for myopia or causing myopia. The weights for calculating the weighted mean are all set to 1.

The environmental score calculated by said one or more processors at the second visit is equal to 0.

The final score of the first subject at the second visit is calculated as the ratio 0.66 / (0.66+0) = 1. The final score of 1 is associated with the recommendation of high dose of atropine by the system. The system determines that an identical myopia control solution with no modification.

However, as the myopia has increased, if the one or more processors determine that the efficiency of the atropine drops currently used is lower than expected, for example if the increase in absolute value of the refraction for the eye within a year is above a predetermined threshold, the system may recommend modifying the implementation of the current myopia control solution, for example by increasing the dosage of the atropine drops to increase efficiency. This variant will be described below.

The first subject comes back again after a year (two years after first visit). At this third visit, the spherical equivalent refraction of the right eye is -4.00D, the spherical equivalent refraction of the left eye is -3.75D.

The child now studies a lot and has near esophoria.

The values of the individual features memorized in said one or more memories 10 of the system according to the disclosure at this third visit are summarized in the fourth column of Table 4.

The weights for calculating the weighted mean are all set to 1.

The individual score calculated at this second visit by said one or more processors is equal to 2/3 = 0.66.

The values of the environmental parameters memorized in said one or more memories 10 of the system according to the disclosure at this third visit are summarized in the fourth column of Table 5.

The values of the environmental parameters have changed because of the evolution in lifestyle of the first subject. The weights for calculating the weighted mean are all set to 1.

The environmental score calculated by said one or more processors 20 at the third visit is equal to 0.5.

The final score of the first subject at the third visit is calculated as the ratio 0.66 / (0.66+0.5) = 0.56. The final score of 0.56 is associated with the recommendation of orthokeratology by the system. The system 60 determines a change of myopia control solution from atropine drops to orthokeratology.

In a second example of implementation of the method of the disclosure, the following data are gathered for a second subject during a first visit to an eye care practitioner. The spherical equivalent refraction of the right eye is -4.50D, the spherical equivalent refraction of the left eye is -4.00D.

The values of the individual features memorized in said one or more memories 10 of the system 60 at this first visit are summarized in the second column of Table 6.

**Table 6**

| **Individual featu res** | **Value and normalized value at first visit** | **Value and normalized value at second visit** |
|---|---|---|
| Number of myopic parents | No myopic parent, Normalized value 0 | No myopic parent, Normalized value 0 |
| Sex | Female, normalized value 1 | Female, normalized value 1 |
| Age | 15 years old, normalized value 0.33 | 15.5 years old, normalized value 0.33 |
| Individual score | 0.44 | 0.44 |

The weights for calculating the weighted mean are all set to 1.

The individual score calculated at this first visit by said one or more processors is equal to 1.33/3 = 0.44.

The values of the environmental parameters memorized in said one or more memories 10 of the system 60 according to the disclosure at this first visit are summarized in the second column of Table 7.

**Table 7**

| **Environmental parameters** | **Value and normalized value at first visit** | **Value and normalized value at second visit** |
|---|---|---|
| Amount of near work | 8h/day, normalized value 0.8 | 8h/day, normalized value 0.8 |
| Type of environment/Type of residence | Big city/apartment, normalized value 1 | Big city/apartment, normalized value 1 |
| Exophoria/Esophoria | Esophoria, normalized value 1 | Exophoria, normalized value 0 |
| Level of undercorrection | Undercorrection by 0.75D, normalized value 1 | No data |
| Accommodative lag | 1.5D of accommodative lag, normalized value 1 | 1.5D of accommodative lag, normalized value 1 |
| Time of use of the myopia control solution | No data | Use less than 5h/day, normalized value 1 |
| Environmental score | 0.96 | 0.96 |

The child studies a lot, lives in an apartment in a big city, which are conditions increasing the risk of myopia. She has near esophoria, an undercorrection of 0.75D, an accommodative lag of 1.5D and uses the current myopia control solution only 5h per day. The environmental parameters therefore promote myopia. The weights for calculating the weighted mean are all set to 1.

The environmental score calculated by said one or more processors at the first visit is equal to 4.8/5 = 0.96.

The final score of the first subject is calculated as the ratio 0.44 / (0.44+0.96) = 0.31. The final score of 0.31 is associated with the recommendation of prismatic bifocal lenses by Table 3. The system is therefore programmed to determine prismatic bifocal lenses.

The second subject comes back after six months. At this second visit, the refraction is not determined, as it is too close from the first visit. However, axial length increase of the eyes of the second subject is equal to 0.22 millimeter. This indicates a progression of the myopia as discussed hereafter.

The values of the individual features memorized in said one or more memories 10 of the system 60 according to the disclosure at this second visit are summarized in the third column of Table 6.

The weights for calculating the weighted mean are all set to 1.

The individual score calculated at this second visit by said one or more processors 20 is equal to 1.33/3 = 0.44.

The values of the environmental parameters memorized in said one or more memories 10 of the system 60 at this second visit are summarized in the third column of Table 7.

The values of the environmental parameters are the same. A new parameter associated with the time of use per day of the myopia control solution is available. The weights for calculating the weighted mean are all set to 1.

The environmental score calculated by said one or more processors 20 at the second visit is equal to 4.8/5 = 0.96.

The final score of the first subject is calculated as the ratio 0.44/(0.44+0.96) = 0.31. The final score of 0.31 is associated with the determination of prismatic bifocal lenses. The system 60 is therefore programmed to recommend prismatic bifocal lenses.

No change of myopia control solution is then recommended by the system.

However, as the axial length has increased the system may recommend adjusting the implementation of the current myopia control solution, for example by increasing the time of use per day to increase efficiency. This variant is described in more details hereafter.

In an embodiment of the system 60, when said subject is already using a myopia control solution, the system is programmed to take into account a lack of efficiency of the currently used myopia control solution when determining a modification of said myopia control solution.

Said system 60 then comprises an acquisition device 30 for acquiring a real value of one or more eye state parameter at a verification time and the method implemented comprises a step 100 of acquiring said real value of one or more eye state parameter at a verification time (figure 2).

The verification time is for example the moment of an ulterior visit to the eye care practitioner.

Each eye state parameter is representative of the myopia degree of the subject in the sense that it is linked to the myopia degree of the subject and varies with the myopia degree of the subject. The values of the eye state parameter may increase or, respectively, decrease with an increased myopia degree and decrease or, respectively, increase with a decreased myopia degree.

The myopia degree may be for example quantified by the absolute value of the refraction of the eye or lenses needed to correct the myopia of the eye. The degree of myopia may for example be described in terms of the power of the ideal dioptric correction needed by the eye, measured in diopters.

In practice, each eye state parameter representative of the myopia degree may comprise an optical and/or physical feature of the eye. It may in particular be based on the axial length of the eye, on the spherical equivalent refraction of the eye of the subject, on the choroidal thickness of the eye or a combination or a ratio of these or cumulative reduction in axial elongation.

The axial length of the eye increases with an increased myopia degree and decreases with a decreased myopia degree, whereas the spherical equivalent refraction decreases with an increased myopia degree and increases with a decreased myopia degree, as sphere power in myopia has a negative value. In the following only absolute values of spherical equivalent refraction will be considered.

The Cumulative Absolute Reduction in axial Elongation (CARE) is the cumulative treatment effect all along the treatment.

For example, if the axial elongation of the eye is 0.35 mm the first year, 0.29 mm the second year and 0.25 mm the third year, the CARE after one year is 0.35 mm the CARE after two years is 0.64 mm and the CARE after three years is 0.89 mm.

The axial length of the eye (AL) is the distance between the anterior surface of the cornea and the retinal pigment epithelium measured at the level of the fovea. It is usually measured by A-scan ultrasonography or optical coherence biometry.

The spherical equivalent refraction is calculated by adding the sum of the sphere power with half of the cylinder power. For example, with a spectacle correction of -3.00 -1.00 x 180, the spherical equivalent refraction = -3.00D + ½(-1.00D) = -3.00D - 0.50D = -3.50D spherical equivalent refraction.

Said device 30 for determining said real value of said one or more eye state parameters comprises preferably a device for measuring said real value on said subject. In a variant, it may comprise a device programmed to retrieve this real value or deduce it from measurements performed by another device, possibly in another location.

Said device 30 comprises for example a phoropter and/or a biometric device or any device suitable for determining these values such as devices for A-scan ultrasonography or optical coherence biometry or cycloplegic autorefraction.

These devices and the methods for determining spherical equivalent refraction and/or axial length of the eye are well-known for the state of the art and not the object of the present disclosure. Therefore, they will not be described in detail here.

Said one or more memories 10 have in memory statistical data relative to the statistical evolution of said one or more eye state parameters with time while said myopia control solution is implemented.

Said statistical data relative to the statistical evolution of said eye state parameter with time while said initial myopia control solution is implemented may for example comprise the mean evolution with time of said eye state parameter while the initial myopia control solution is implemented. Said statistical data may also comprise data relative to the dispersion of the eye state parameter values, such as the evolution with time of the standard deviation of said eye state parameter while the initial myopia control solution is implemented.

These statistical data may comprise thresholds for myopia progression within a given amount of time while implementing each available myopia control solution. These thresholds can be defined in several ways:
- deviation from an average efficacy empirically defined, or a percentage of the average efficacy,
- based on a predictive model of myopia progression,
- based on the practitioner's experience.

Such thresholds may for example be expressed as expected values for magnitudes representative of the myopia progression (such as axial length of the eye or spherical equivalent refraction).

Said one or more processors are then programmed to:
- determine (block 150 of figure 2) an expected value of a magnitude linked to each eye state parameter at said verification time based on said statistical data relative to the statistical evolution of said eye state parameter with time while said myopia control solution is used, and a real value (block 100 of figure 2) of said magnitude based on said real value of the eye state parameter,
- compare (block 200 of figure 2) said real value of said magnitude with said expected value of said magnitude for each eye state parameter.

Said magnitude may be the eye state parameter itself. It may comprise an effective evolution parameter of said eye state parameter or a magnitude quantifying the efficacy of the myopia control solution.

The efficacy of said myopia control solution is defined as a magnitude representative of the ability of this myopia control solution to produce a desired or intended result in controlling the myopia of the wearer. The efficacy may for example be quantified as a percentage value, 100% being the highest efficacy and 0% being the lowest efficacy.

Typically, the efficacy of a myopia control solution may be determined during said clinical trial involving a control group of subjects and a test group of subjects.

In the examples described here, said magnitude may be:
- the axial length or spherical equivalent refraction or choroidal thickness of the eye,
- an effective evolution parameter, for example the absolute effective evolution parameter or effective evolution parameter percentage as defined above, representative of the evolution of the myopia degree of the eye with time, for example determined based on axial length or spherical equivalent refraction or choroidal thickness,
- a parameter linked to the efficacy of the myopia control solution.
- A blur index can also be used to monitor myopia progression. The PCT application reference WO2020120595 describes a way to determine what should be the progression of a given child with a given lens The magnitude used may depend on the amount of time elapsed since the last visit.

The amount of time can be either several days, several months, one semester or a year.

The magnitude and its measurement method for each amount of time is specific to the duration:
- choroidal thickness is used for an elapsed time of days,
- axial length and/or choroidal thickness are measured when the time elapsed is comprised between 1 and 6 months,
- refraction and/or axial length are measured when the time elapsed is a year or more.

Refraction is measured for example through cycloplegic autorefraction.

When this comparison indicates that the myopia of the subject is statistically progressing slower than expected or as expected with said myopia control solution, the one or more processors 20 are programmed to determine that the myopia control solution should be maintained: no modification of the current myopia control solution (path 202 and block 300 of figure 2).

When said comparison indicates that the myopia degree of the eye of the subject at said verification time is higher than an expected myopia degree, said one or more processors 20 are programmed to perform steps i) to iii) (path 201 of figure 2).

These steps allow the system taking into account the root cause for the faster progression than expected of the myopia of the subject.

In an example of such an embodiment, two different eye state parameters are for example taken into consideration. These eye state parameters are the spherical equivalent refraction (SER) and the axial length (AL) of the eye. Other eye state parameters may also be taken into consideration.

During a visit of the subject to an eye care practitioner, the values of the spherical equivalent refraction and of the axial length of the eye of the subject are measured with a device of the system 60.

The one or more processors 20 of said system 60 use the statistical data of said one or more memories 10 to determine an expected value of said spherical equivalent refraction and axial length taking optionally into account the values of individual features of the subject and of the environmental parameters.

In particular, previously determined real values of the spherical equivalent refraction and axial length and time elapsed since while using the current myopia control solution are preferably taken into account.

The real value of each eye state parameter is compared to the corresponding expected value of this eye state parameter (block 200 of figure 2).

When this comparison indicates that the myopia of the subject is statistically progressing faster than expected with said myopia control solution, the one or more processors 20 are programmed to perform additional steps to determine a modification of the current myopia control solution (path 201).

In a specific implementation of this embodiment, a performance index of said myopia control solution may be identified to or deduced from said real value of said magnitude. It may be for example equal to the spherical equivalent refraction of the eye, to the axial length of the eye or to the axial length elongation or increase of the eye.

A control objective may be identified to or deduced from said expected value of the magnitude. It is memorized in said one or more memories. Alternatively, said control objective may have a predetermined, fixed value.

In this case, the one or more processors are then programmed to determine said control performance index of said myopia control solution and compare said control performance index with said control objective.

When said control performance index is below said control objective, the one or more processors are programmed to determine a root cause for said control performance index being below said control objective and determine said modification of said myopia control solution for said subject based also on said root cause. The root cause is for example determined by calculating said final score.

In an advantageous embodiment of the system 60, said values of said environmental parameters saved in said one or more memories 10 comprise a value of a parameter relative to a usage time or to a frequency of use of said myopia control solution or to a compliance level of the subject to conditions of use of said myopia control solution.

The usage time may comprise a wearing time when the myopia control solution uses contact lenses or ophthalmic lenses in an eyewear.

When said comparison indicates that the myopia degree of the eye of the subject at said verification time is higher than an expected myopia degree, or that the performance index is below said control objective, said one or more processors 20 are programmed to:
- in a preliminary step 400 before performing steps i) to iii), compare said value of said parameter relative to a usage time or to a frequency of use of said myopia control solution or to a compliance level of the subject to conditions of use of said myopia control solution with a corresponding threshold value, and
- perform steps i) to iii) only when said comparison indicates that the usage time, frequency of use or compliance is above said threshold value (path 401 of figure 2).

When said comparison indicates that the usage time, frequency of use or compliance level is below or equal to said threshold value (path 402 of figure 2), said one or more processors 20 are programmed to determine said modification of said myopia control solution as being either:
- an adjustment 600 of the myopia control solution to increase usage time or frequency of use of said myopia control solution or the compliance level of the subject, or
- a change 700 of said myopia control solution into another myopia control solution.

More precisely, said one or more processors 20 are programmed to compare (block 500 of figure 2) the usage time, frequency of use or compliance level to maximum values of usage time, frequency of use or compliance level and if the current usage time, frequency of use or compliance level is below this maximum level, the adjustment of the myopia control solution to increase usage time or frequency of use or compliance level of the is recommended by the system (block 600 of figure 2).

Otherwise, when usage time, frequency of use or compliance level are already maximal or cannot be increased, the system 60 is programmed to determine a new, different myopia control solution with the next best expected efficacy based for example on the statistical data in memory (block 700 of figure 2).

The next best myopia solution may be the myopia solution associated with the range of final scores closest to the final score actually calculated for the subject.

When said comparison indicates that the usage time, frequency of use and/or compliance level is above said threshold value (path 401), said one or more processors are programmed to perform steps i) and ii), thereby reassessing the root cause for myopia of the subject.

The one or more processors 20 are then programmed to perform step i) (block 800 of figure 2) and step ii) (block 900 of figure 2) to determine said individual and environmental scores.

They are programmed to determine said final score based on said individual and environmental scores (block 1100 of figure 2).

In a subsequent step, said one or more processors 20 are programmed to compare the final score determined at said verification time with the previous values determined for this score (block 1200).

When the root cause has changed, meaning that the individual score or environmental score has changed and that the new value of the final score is associated with a different myopia control solution than the one already used by the subject, in step iii), the one or more processors 20 are programmed to determine a modification of said myopia control solution (path 1202 and block 1600 of figure 2). The modification comprises a change for the myopia control solution associated with the new value of the final score according to Table 3.

When the root cause has not changed, meaning that the individual score and environmental score have not changed and/or that the final score is associated with the same myopia control solution as already used by the subject, in step iii), the one or more processors 20 are programmed to check whether the comparison of each real value of said magnitude with the corresponding expected value of this magnitude indicates that the myopia degree of the eye of the subject at said verification time is higher than an expected myopia degree for all of said one or more eye state parameter or if at least at least one value of said magnitudes indicate that the myopia degree of the eye of the subject at said verification time is lower than an expected myopia degree (path 1201 and block 1300 of figure 2).

When all values of said magnitudes indicate that the myopia degree of the eye of the subject at said verification time is higher than an expected myopia degree, the one or more processors 20 are programmed to determine a modification of the myopia control solution comprising an adjustment of the implementation parameters of this myopia control solution, for example an increase in dosage of atropine or an increase of the refraction of the lenses, in order to increase the effect of the myopia control solution (block 1400 of figure 2).

When at least one value of said magnitudes indicate that the myopia degree of the eye of the subject at said verification time is lower than an expected myopia degree, the one or more processors 20 are programmed to determine a modification of the myopia control solution comprising a change of the myopia control solution for a different myopia control solution, for example by determining the myopia control solution having the next best efficacy according to the statistical data in said one or more memories or by determining a different myopia control solution combining the current myopia control solution with another solution (block 1500 of figure 2).

In case the myopia control solution currently used by the subject works better than expected, there are 3 different scenarios:
- adjust the sphere of the corrective lenses used only;
- adjust another implementation parameter of said myopia control solution (different from the sphere) that is easier to use (if there is any);
- change to another myopia control solution that is easier to use (if there is any).

The disclosure comprises a computer-implemented method and the system used to perform it. The system may comprise a smartphone, a tablet, and/or an instrument interface which could be used by eye care professionals in their routine control, as well as by the patient as part of their home monitoring.

When used by eye care professionals, the interval of control/ data input will be for example 6 months to1 year. They will use eye state parameters such as spherical equivalent refraction, axial length and choroidal thickness.

Nonetheless, environmental parameters such as wear time can be monitored directly with/by the subject himself on a daily basis. Changes in individual features such as visual acuity can be monitored via complementary tools over intervals of weeks.

In other words, the method can be implemented with input data collected at different meaningful time intervals, which are subsequently aggregated.

Two examples of implementation of the above described embodiments of the method and system 60 are described hereafter.

In the first example mentioned above, the first subject is a 6-year-old boy. As explained before, the final score calculated for the first subject is 1 at the first visit.

According to Table 3, the myopia control solution associated with this final score is atropine. The system 60 then determines the myopia control solution to be atropine drops.

The one or more memories of the system have in memory that based on his age, sex, and other individual features, the expected myopia progression thresholds of the first subject with atropine, computed from existing clinical trials, are: after 6 months, an axial elongation, that is to say an increase of axial length of maximum 0.20 mm and after 1 year, an axial elongation of 0.40 mm and an increase in absolute value of spherical equivalent refraction of 0.60D.

At the second visit, the first subject comes back after 1 year. His spherical equivalent refraction has progressed by 0.75D and his axial length by 0.44 mm. Both spherical equivalent refraction and axial length progression are higher than the predetermined thresholds.

His compliance for regular atropine drops instillation is satisfactory and his final score, hence the root cause for myopia, have not changed over the last year. The final score is still equal to 1.

According to the steps described before, the one or more processors 20 are programmed to determine a modification of the myopia control solution comprising an adjustment of the current myopia control solution to increase its effect. The system 60 determines a modification comprising increasing the dosage of atropine.

Based on his age, sex, and other individual features, the expected myopia progression thresholds of the first subject with low dosage atropine, are still: after 6 months, an axial elongation of maximum 0.20 mm and after 1 year, an axial elongation of 0.40 mm and an increase in absolute value of spherical equivalent refraction of 0.60D.

At the third visit, the spherical equivalent refraction of the first subject has progressed by 0.75D and his axial length by 0.44mm. Both progressions are higher than the predetermined thresholds.

The final score determined, hence the root cause index, is now 0.56 due to an increase of near work. As mentioned before, the first subject is shifted from atropine to orthokeratology. Indeed, according to Table 3, the closest myopia control solution is orthokeratology.

In the second example mentioned above, the second subject is a 15-year-old girl. The final score determined at the first visit is 0.31. The system determines that the first myopia control solution of the second subject should be prismatic bifocal lenses.

Based on her age, sex, and other individual features, the expected myopia progression thresholds of the second subject with prismatic bifocal lenses computed from existing clinical trials are: after 6 months, an axial elongation of maximum 0.15 mm and after 1 year, an axial elongation of 0.30 mm and an increase in absolute value of spherical equivalent refraction of 0.50D.

At the second visit, the measured axial elongation over the last 6 months is 0.22 mm, i.e., 0.07mm more than the predetermined threshold.

The one or more processors are then programmed to compare the usage time of the myopia control solution with a usage time threshold. In this case, the one or more processors determine that the usage time is below the usage time threshold. The second subject does not wear the glasses at school.

The system 60 determines that the modification of the myopia control solution comprises an adjustment of the current myopia control solution to increase usage time or compliance.

After investigation from the eye care professional, the reason for the short usage time is because the frame is not well fitted, and painful.

The frame is re fitted so that it is comfortable again. The second subject is urged to increase usage time.

Other possible adjustments of the myopia control solution may include: increased or decreased addition power or more positive sphere power for solutions relating to correcting or reducing accommodative lag during near vision activities;
- increased or decreased positive sphere power for solutions correcting peripheral hyperopic defocus in the region corresponding to peripheral vision;
- increased or decreased number of lenslets and/or the positive range of power of the lenslets for solutions providing retinal stimulation using multiple light stimuli located in front of retina of the eye of the subject;
- lowered transmittance in the periphery of the lenses to increase contrast for solutions providing a different and lower contrast in peripheral vision of the subject;
- increased transmittance in the periphery of the lenses to decrease contrast for solutions providing a different and lower contrast in peripheral vision of the subject;
- decreased or increased amount of red light for solutions limiting the amount of red light entering the eye to reduce chromatism of the eye using a specific filter;
- increased or decreased transmission of the wavelength for solutions providing light having a specific wavelength to the eye to inhibit eye lengthening;
- increased or decreased frequency for solutions providing dynamically varying light stimuli such as flickering;
- increased or decreased dosage for solutions providing drugs to regulate retinal and scleral muscarinic receptors;
- modification of the shape of the lenses used in orthokeratology solutions to provide a flatter base curve and/or a, flatter center zone.

Parameters to be taken into account for defining the timeline for said follow-up visit can be according to:
- the combination of age and myopia level: the higher the level of myopia is at a younger age implies a shorter period, for example equal to 3 months or less between two follow-up visits;
- the myopia progression pace: the higher the risk of having a fast progression requires a shorter period before the next visit, for example equal to 3 months or less,
- the expected efficacy of the myopia control solution: the lower the efficacy, the sooner is the follow-up visit to be determined for example equal to 3 months or less,
- a predetermined timetable according to a standard myopia management program or package: regular visits to be done according to frequency that can be 3 months, 6 months or one year.

## Claims

1. System (60) for determining a myopia control solution to be used by a subject, comprising one or more memories (10) and one or more processors (20), said one or more memories (10) having in memory:
- values of individual features of said subject and
- values of environmental parameters relative to conditions of use by said subject of said myopia control solution and
said one or more processors (20) being programmed to:
i) determine an individual score for said subject depending on said values of individual features of said subject, said individual score being linked to a role of said individual features in causing the myopia of said subject,
ii) determine an environmental score for said conditions of use of the myopia control solution by said subject depending on said values of said environmental parameters, said environmental score being linked to a role of said environmental parameters in causing the myopia of said subject and
iii) determine said myopia control solution for said subject based on said individual and environmental scores.

2. System (60) according to claim 1, wherein said one or more processors (20) are programmed to determine on step iii) a first myopia control solution or a modification of a myopia control solution currently used by said subject, said myopia control solution comprising one or more devices for implementing one of the following actions or several of the following actions simultaneously:
- correcting or reducing the accommodative lag during near vision activities;
- correcting or reducing peripheral hyperopic defocus or providing myopic defocus;
- providing retinal stimulation;
- providing a different contrast in peripheral vision of the subject;
- limiting the amount of light with a specific wavelength entering an eye of the subject to reduce chromatism of the eye or an exposure of the retina to the specific wavelength,
- providing light having a specific wavelength to the eye to inhibit eye lengthening,
- providing dynamically varying light stimuli,
- providing drugs to regulate retinal and scleral muscarinic receptors;
- reshaping the cornea of the eye to reduce refraction defects;
- reshaping the cornea of the eye to induce extended depth of focus;
- providing myopic defocus in the retinal periphery and/or optical aberrations by flattening the shape of the cornea,
- stiffening or strengthening of a sclera of the eye or/and a cornea of the eye and/or a choroid of the eye.

3. System (60) according to claim 2, wherein said device comprises a pharmaceutical drops provider, multifocal spectacle lenses, spectacle lenses with micro-structures, orthokeratology lenses or multifocal soft contact lenses and/or a device to provide at least one retinal stimulation using light stimuli located in front of a retina of an eye of the subject.

4. System (60) according to any one of claims 1 to 3, wherein said one or more processors (20) are programmed to determine said myopia control solution using a predetermined and fixed relationship associating said myopia control solution and said individual and environmental scores.

5. System (60) according to claim 4, wherein said one or more processors (20) are programmed to determine a final score based on said individual and environmental scores and take it into account to determine said myopia control solution.

6. System (60) according to claim 5, wherein said one or more processors (20) are programmed to calculate said final score as the ratio between said individual score and the sum of said individual score and said environmental score.

7. System (60) according to any one of claims 1 to 6, wherein said one or more processors (20) are programmed to establish and/or update a relationship between said myopia control solution and said final score using a machine learning algorithm.

8. System (60) according to any one of claims 1 to 7, wherein said values of individual features of said subject saved in said one or more memories (10) comprises a value of one or more of the following individual features:
- number of myopic parents and/or myopic siblings and/or level of myopia of parents and/or myopic siblings of the subject,
- number of alleles of the subject's genotype indicating a risk of myopia,
- ocular biometrics parameter of at least one eye of the subject,
- ocular biomechanics parameter of at least one eye of the subject,
- optometric features of the subject,
- medical history of the subject,
- sex of the subject,
- age of the subject,
- Intelligence Quotient and/or general academic performance of the subject,
- season and/or date of birth of the subject,
- ethnicity and/or geographical origin of the subject.

9. System (60) according to any one of claims 1 to 8, wherein said values of environmental parameters saved in said memories (10) comprises a value of one or more of the following environmental parameters of the subject:
- time spent achieving near work and/or working distance for near work,
- time spent outdoors and/or indoors,
- type of environment,
- country and/or city of residence and/or type of residence,
- activities and/or lifestyle,
- type of lighting used while performing near vision tasks,
- time spent while using the myopia control solution,
- reading posture,
- level of undercorrection of said myopia,
- accommodation parameters,
- binocular vision parameters,
- parameters of lens usage.

10. System (60) according to any one of claims 1 to 9, wherein said one or more processors (20) are programmed to calculate each of said individual score and environmental score as a mean value or weighted mean value of the values of said individual features and environmental parameters, respectively.

11. System (60) according to any one of claims 1 to 10, wherein:
- said system (60) comprises an acquisition device (30) for acquiring a real value of each of one or more eye state parameters at a verification time,
- said subject using an initial myopia control solution, said one or more memories have in memory statistical data relative to the statistical evolution of each eye state parameter with time while said initial myopia control solution is implemented,
- said one or more processors (20) are programmed to:
determine an expected value of a magnitude linked to each of said one or more eye state parameters at said verification time based on said statistical data relative to the statistical evolution of each eye state parameter with time while said initial myopia control solution is used, and a real value of said magnitude based on said real value of each eye state parameter,
compare said real value of said magnitude with said expected value of said magnitude for each eye state parameter, and
when said comparison indicates that the myopia degree of the eye of the subject at said verification time is higher than an expected myopia degree for at least one of said one or more eye state parameters, said one or more processors (20) are programmed to perform steps i) to iii).

12. System (60) according to claim 11, wherein said one or more memories (10) have in memory a control objective of said initial myopia control solution and the one or more processors (20) are programmed to:
- determine a control performance index of said initial myopia control solution,
- compare said control performance index with said control objective,
- when said control performance index is below said control objective, determine a root cause for said control performance index being below said control objective, and
- in step iii), determine a modified myopia control for said subject taking into account said root cause.

13. System (60) according to any one of claims 11 and 12, wherein
- said values of said environmental parameters saved in said one or more memories (10) comprise a value of a parameter relative to a usage time or to a frequency of use of said initial myopia control solution or to a compliance level of the subject to conditions of use of said initial myopia control solution, and
- when said comparison indicates that the myopia degree of the eye of the subject at said verification time is higher than an expected myopia degree, said one or more processors (20) are programmed to:
compare said value of said parameter relative to a usage time or to a frequency of use of said initial myopia control solution or to a compliance level of the subject to conditions of use of said initial myopia control solution with a corresponding threshold value, and
perform steps i) to iii) only when said comparison indicates that the usage time, frequency of use or compliance is above said threshold value.

14. System (60) according to claim 13, wherein
when said comparison indicates that the usage time, frequency of use or compliance level is below or equal to said threshold value, said one or more processors (20) are programmed to determine said modified myopia control solution by:
an adjustment of the initial myopia control solution to increase usage time or frequency of use of said myopia control solution or the compliance level of the subject, or
a change of said initial myopia control solution into another myopia control solution.

15. Method for determining a myopia control solution to be used by a subject, comprising the following steps:
- providing values of individual features of said subject and values of environmental parameters relative to conditions of use by said subject of said myopia control solution,
- determining an individual score for said subject depending on said values of individual features of said subject, said individual score being linked to a role of said individual features in causing the myopia of said subject,
- determining an environmental score for said conditions of use of the myopia control solution by said subject depending on said values of said environmental parameters, said environmental score being linked to a role of said environmental parameters in causing the myopia of said subject and
- determining said myopia control solution for said subject based on said individual and environmental scores.
